# EUROPEAN PATENT APPLICATION

(11) **EP 3 561 495 A1**
(43) Date of publication of application: **30.10.2019**
(21) Application number: 19168086.7
(22) Date of filing: 09.04.2019
(51) Int. Cl.: G01N 21/954, F01D 21/00, G02B 23/24

(54) **INSPECTION AND MAINTENANCE APPARATUS**

(30) Priority: 26.04.2018 GB 201806822
(71) Applicant: Rolls-Royce plc, London SW1E 6AT (GB)
(72) Inventor: Norton, Andrew, Derby, Derbyshire DE24 8BJ (GB); Gameros, Andres, Derby, Derbyshire DE24 8BJ (GB)
(74) Representative: Rolls-Royce plc

(57) **Abstract**

The present disclosure relates to the inspection and repair/maintenance of an item such as a gas turbine engine. Apparatus (110) is provided for connecting apertures (124,142) in an item to be inspected. The apparatus (110) comprises a tubular guide (130) with first and second ends (134,136) and a hollow interior (138) for receiving an inspection tool, and a housing fixture (120) for mounting the tool to an outer shell (126) of the item. The apparatus (110) provides an articulated joint between the tubular guide (130) and the housing fixture (120). A cooling system may also be included.

## Description

The present disclosure relates to the inspection or repair of an item such as a gas turbine engine, for example an aeroengine.

Performing an on-wing or in-situ inspection or repair of an aeroengine is beneficial, due to the diminished requirement of performing an engine removal and strip. A significant number of inspection or repair systems are able to be deployed via access or borescope ports on the side of the engine. Many borescope ports are formed of two or more concentric holes, one hole in the outer casing and one or more in the inner component(s). This makes deployment of an inspection or repair device relatively straightforward.

However, some aeroengine or gas turbine borescope ports are formed of two or more non-concentric holes. Moreover, two concentric holes might be misaligned during the normal functioning of the aeroengine or gas turbine due to the thermal expansion of each individual component. This complicates deployment of an inspection or repair device significantly, especially when the device needs to be deployed accurately and repeatedly to the same location. Many repair and inspection devices are rigid rather than flexible, which further hinders their deployment.

Another area of concern for inspection of gas turbines, including aeroengines as well as marine and industrial gas turbines, relates to the harsh environmental conditions that exist within the components during use. In particular, high operating temperatures within gas turbines and similar can cause damage to inspection tools, particularly tools which are delicate or sensitive.

With these problems in mind, the following disclosure considers a method and apparatus for guiding an inspection or repair system into the area of interest.

According to a first aspect there is provided inspection and maintenance apparatus for connecting apertures in an article to be inspected, the article comprising an outer shell having a first aperture therein, and an internal part, located within the outer shell, and having a second aperture therein, the apparatus comprising a tubular guide having a straight elongate body with first and second ends and a hollow interior for receiving an inspection tool, and a housing fixture for mounting the tool to the outer shell, wherein the first end of the tubular guide is received and retained within the housing fixture and the second end of the tubular guide is insertable, in use, through the first aperture, and is engageable with the second aperture provided in the internal part.

In this context, tubular should be understood to mean a hollow elongate component that may be generally cylindrical, but could alternatively have a different cross-sectional shape if desired.

The inspection tool may be an inspection probe, in particular a rigid inspection probe. The inspected article may be an aeroengine, a marine or industrial gas turbine, or an alternative machine for use in high temperature environments, such as nuclear power generation or steel production, where remote visual inspection via an embedded probe is required.

For example, the outer shell may be the outer casing of a gas turbine engine and the first and second apertures may be borescope ports in the engine. The internal part may be an inner casing, heat shield or similar
A fluid flow passage may be provided around the hollow interior of the tubular guide for cooling the apparatus.

The tubular guide may comprise an inner wall defining the hollow interior, and an outer wall spaced from the inner wall to provide an annular space. The fluid flow passageway may be provided between the inner and outer walls.

The tubular guide may comprise a helical fluid flow passageway around the hollow interior.

The tubular guide and/or the housing fixture may comprise a micro porosity and/or a micro lattice internal structure.

For example, the fluid flow passageway may comprise a micro porosity structure.

The apparatus may further comprise a vapour passageway.

The vapour passageway may be provided within the fluid flow passageway.

Alternatively, the vapour passageway and the fluid flow passageway may be separate/distinct.

The vapour passageway may comprise a micro lattice internal structure.

The internal structure or any or all parts described may be constructed through additive manufacturing
The housing fixture may comprise a chamber for containing fluid, and the first end of the tubular guide may comprise an opening to the fluid flow passage, the opening being received within the chamber.

The housing fixture may comprise a port to allow fluid to enter and/or leave the apparatus.

The first end of the tubular guide may be substantially spherical, and the housing fixture may comprise a substantially spherical hole for receiving the first end of the tubular guide.

The first end of the tubular guide may have a substantially tubular shape, and the housing fixture may comprise a substantially tubular hole for receiving the first end of the tubular guide.

The first end of the tubular guide may have a substantially elliptical shape, and the housing fixture may comprise a substantially elliptical hole for receiving the first end of the tubular guide.

The second end of the tubular guide may be substantially elliptical.

Also provided is a gas turbine engine for an aircraft, comprising an engine core comprising a turbine, a compressor, and a core shaft connecting the turbine to the compressor a fan located upstream of the engine core, the fan comprising a plurality of fan blades; and a gearbox that receives an input from the core shaft and outputs drive to the fan so as to drive the fan at a lower rotational speed than the core shaft, a housing fixture mounted to an outer shell of the engine, and a tubular guide having a straight elongate body with first and second ends and a hollow interior for receiving an inspection tool, wherein the first end of the tubular guide is received and retained within the housing fixture to provide an articulated joint between the tubular guide and the housing fixture, and the second end of the tubular guide is insertable, in use, through the first aperture, and is engageable with a second aperture provided in an internal part of the engine.

The first and second apertures may be borescope ports.

The turbine may be a first turbine, the compressor may be a first compressor, and the core shaft may be a first core shaft. The engine core may further comprise a second turbine, a second compressor, and a second core shaft connecting the second turbine to the second compressor; and the second turbine, second compressor, and second core shaft may be arranged to rotate at a higher rotational speed than the first core shaft.

As noted elsewhere herein, the present disclosure may relate to apparatus for use with a gas turbine engine. Such a gas turbine engine may comprise an engine core comprising a turbine, a combustor, a compressor, and a core shaft connecting the turbine to the compressor. Such a gas turbine engine may comprise a fan (having fan blades) located upstream of the engine core.

Arrangements of the present disclosure may be particularly, although not exclusively, beneficial for fans that are driven via a gearbox. Accordingly, the gas turbine engine may comprise a gearbox that receives an input from the core shaft and outputs drive to the fan so as to drive the fan at a lower rotational speed than the core shaft. The input to the gearbox may be directly from the core shaft, or indirectly from the core shaft, for example via a spur shaft and/or gear. The core shaft may rigidly connect the turbine and the compressor, such that the turbine and compressor rotate at the same speed (with the fan rotating at a lower speed).

The gas turbine engine as described and/or claimed herein may have any suitable general architecture. For example, the gas turbine engine may have any desired number of shafts that connect turbines and compressors, for example one, two or three shafts. Purely by way of example, the turbine connected to the core shaft may be a first turbine, the compressor connected to the core shaft may be a first compressor, and the core shaft may be a first core shaft. The engine core may further comprise a second turbine, a second compressor, and a second core shaft connecting the second turbine to the second compressor. The second turbine, second compressor, and second core shaft may be arranged to rotate at a higher rotational speed than the first core shaft.

In such an arrangement, the second compressor may be positioned axially downstream of the first compressor. The second compressor may be arranged to receive (for example directly receive, for example via a generally annular duct) flow from the first compressor.

The gearbox may be arranged to be driven by the core shaft that is configured to rotate (for example in use) at the lowest rotational speed (for example the first core shaft in the example above). For example, the gearbox may be arranged to be driven only by the core shaft that is configured to rotate (for example in use) at the lowest rotational speed (for example only be the first core shaft, and not the second core shaft, in the example above). Alternatively, the gearbox may be arranged to be driven by any one or more shafts, for example the first and/or second shafts in the example above.

In any gas turbine engine as described and/or claimed herein, a combustor may be provided axially downstream of the fan and compressor(s). For example, the combustor may be directly downstream of (for example at the exit of) the second compressor, where a second compressor is provided. By way of further example, the flow at the exit to the combustor may be provided to the inlet of the second turbine, where a second turbine is provided. The combustor may be provided upstream of the turbine(s).

The or each compressor (for example the first compressor and second compressor as described above) may comprise any number of stages, for example multiple stages. Each stage may comprise a row of rotor blades and a row of stator vanes, which may be variable stator vanes (in that their angle of incidence may be variable). The row of rotor blades and the row of stator vanes may be axially offset from each other.

The or each turbine (for example the first turbine and second turbine as described above) may comprise any number of stages, for example multiple stages. Each stage may comprise a row of rotor blades and a row of stator vanes. The row of rotor blades and the row of stator vanes may be axially offset from each other.

Each fan blade may be defined as having a radial span extending from a root (or hub) at a radially inner gas-washed location, or 0% span position, to a tip at a 100% span position. The ratio of the radius of the fan blade at the hub to the radius of the fan blade at the tip may be less than (or on the order of) any of: 0.4, 0.39, 0.38 0.37, 0.36, 0.35, 0.34, 0.33, 0.32, 0.31, 0.3, 0.29, 0.28, 0.27, 0.26, or 0.25. The ratio of the radius of the fan blade at the hub to the radius of the fan blade at the tip may be in an inclusive range bounded by any two of the values in the previous sentence (i.e. the values may form upper or lower bounds). These ratios may commonly be referred to as the hub-to-tip ratio. The radius at the hub and the radius at the tip may both be measured at the leading edge (or axially forwardmost) part of the blade. The hub-to-tip ratio refers, of course, to the gas-washed portion of the fan blade, i.e. the portion radially outside any platform.

The radius of the fan may be measured between the engine centreline and the tip of a fan blade at its leading edge. The fan diameter (which may simply be twice the radius of the fan) may be greater than (or on the order of) any of: 250 cm (around 100 inches), 260 cm, 270 cm (around 105 inches), 280 cm (around 110 inches), 290 cm (around 115 inches), 300 cm (around 120 inches), 310 cm, 320 cm (around 125 inches), 330 cm (around 130 inches), 340 cm (around 135 inches), 350cm, 360cm (around 140 inches), 370 cm (around 145 inches), 380 (around 150 inches) cm or 390 cm (around 155 inches). The fan diameter may be in an inclusive range bounded by any two of the values in the previous sentence (i.e. the values may form upper or lower bounds).

The rotational speed of the fan may vary in use. Generally, the rotational speed is lower for fans with a higher diameter. Purely by way of non-limitative example, the rotational speed of the fan at cruise conditions may be less than 2500 rpm, for example less than 2300 rpm. Purely by way of further non-limitative example, the rotational speed of the fan at cruise conditions for an engine having a fan diameter in the range of from 250 cm to 300 cm (for example 250 cm to 280 cm) may be in the range of from 1700 rpm to 2500 rpm, for example in the range of from 1800 rpm to 2300 rpm, for example in the range of from 1900 rpm to 2100 rpm. Purely by way of further non-limitative example, the rotational speed of the fan at cruise conditions for an engine having a fan diameter in the range of from 320 cm to 380 cm may be in the range of from 1200 rpm to 2000 rpm, for example in the range of from 1300 rpm to 1800 rpm, for example in the range of from 1400 rpm to 1600 rpm.

In use of the gas turbine engine, the fan (with associated fan blades) rotates about a rotational axis. This rotation results in the tip of the fan blade moving with a velocity Uₜᵢₚ. The work done by the fan blades 13 on the flow results in an enthalpy rise dH of the flow. A fan tip loading may be defined as dH/Uₜᵢₚ², where dH is the enthalpy rise (for example the 1-D average enthalpy rise) across the fan and Uₜᵢₚ is the (translational) velocity of the fan tip, for example at the leading edge of the tip (which may be defined as fan tip radius at leading edge multiplied by angular speed). The fan tip loading at cruise conditions may be greater than (or on the order of) any of: 0.3, 0.31, 0.32, 0.33, 0.34, 0.35, 0.36, 0.37, 0.38, 0.39 or 0.4 (all units in this paragraph being Jkg⁻¹K⁻¹/(ms⁻¹)²). The fan tip loading may be in an inclusive range bounded by any two of the values in the previous sentence (i.e. the values may form upper or lower bounds).

Gas turbine engines in accordance with the present disclosure may have any desired bypass ratio, where the bypass ratio is defined as the ratio of the mass flow rate of the flow through the bypass duct to the mass flow rate of the flow through the core at cruise conditions. In some arrangements the bypass ratio may be greater than (or on the order of) any of the following: 10, 10.5, 11, 11.5, 12, 12.5, 13, 13.5, 14, 14.5, 15, 15.5, 16, 16.5, or 17. The bypass ratio may be in an inclusive range bounded by any two of the values in the previous sentence (i.e. the values may form upper or lower bounds). The bypass duct may be substantially annular. The bypass duct may be radially outside the core engine. The radially outer surface of the bypass duct may be defined by a nacelle and/or a fan case.

The overall pressure ratio of a gas turbine engine as described and/or claimed herein may be defined as the ratio of the stagnation pressure upstream of the fan to the stagnation pressure at the exit of the highest pressure compressor (before entry into the combustor). By way of non-limitative example, the overall pressure ratio of a gas turbine engine as described and/or claimed herein at cruise may be greater than (or on the order of) any of the following: 35, 40, 45, 50, 55, 60, 65, 70, 75. The overall pressure ratio may be in an inclusive range bounded by any two of the values in the previous sentence (i.e. the values may form upper or lower bounds).

Specific thrust of an engine may be defined as the net thrust of the engine divided by the total mass flow through the engine. At cruise conditions, the specific thrust of an engine described and/or claimed herein may be less than for on the order of) any of the following: 110 Nkg⁻¹s, 105 Nkg⁻¹s, 100 Nkg⁻¹s, 95 Nkg s, 90 Nkg⁻¹s, 85 Nkg s or 80 Nkg⁻¹s. The specific thrust may be in an inclusive range bounded by any two of the values in the previous sentence (i.e. the values may form upper or lower bounds). Such engines may be particularly efficient in comparison with conventional gas turbine engines.

A gas turbine engine as described and/or claimed herein may have any desired maximum thrust. Purely by way of non-limitative example, a gas turbine as described and/or claimed herein may be capable of producing a maximum thrust of at least (or on the order of) any of the following: 160kN, 170kN, 180kN, 190kN, 200kN, 250kN, 300kN, 350kN, 400kN, 450kN, 500kN, or 550kN. The maximum thrust may be in an inclusive range bounded by any two of the values in the previous sentence (i.e. the values may form upper or lower bounds). The thrust referred to above may be the maximum net thrust at standard atmospheric conditions at sea level plus 15 deg C (ambient pressure 101.3kPa, temperature 30 deg C), with the engine static.

In use, the temperature of the flow at the entry to the high pressure turbine may be particularly high. This temperature, which may be referred to as TET, may be measured at the exit to the combustor, for example immediately upstream of the first turbine vane, which itself may be referred to as a nozzle guide vane. At cruise, the TET may be at least (or on the order of) any of the following: 1400K, 1450K, 1500K, 1550K, 1600K or 1650K. The TET at cruise may be in an inclusive range bounded by any two of the values in the previous sentence (i.e. the values may form upper or lower bounds). The maximum TET in use of the engine may be, for example, at least (or on the order of) any of the following: 1700K, 1750K, 1800K, 1850K, 1900K, 1950K or 2000K. The maximum TET may be in an inclusive range bounded by any two of the values in the previous sentence (i.e. the values may form upper or lower bounds). The maximum TET may occur, for example, at a high thrust condition, for example at a maximum take-off (MTO) condition.

A fan blade and/or aerofoil portion of a fan blade described and/or claimed herein may be manufactured from any suitable material or combination of materials. For example at least a part of the fan blade and/or aerofoil may be manufactured at least in part from a composite, for example a metal matrix composite and/or an organic matrix composite, such as carbon fibre. By way of further example at least a part of the fan blade and/or aerofoil may be manufactured at least in part from a metal, such as a titanium based metal or an aluminium based material (such as an aluminium-lithium alloy) or a steel based material. The fan blade may comprise at least two regions manufactured using different materials. For example, the fan blade may have a protective leading edge, which may be manufactured using a material that is better able to resist impact (for example from birds, ice or other material) than the rest of the blade. Such a leading edge may, for example, be manufactured using titanium or a titanium-based alloy. Thus, purely by way of example, the fan blade may have a carbon-fibre or aluminium based body (such as an aluminium lithium alloy) with a titanium leading edge.

A fan as described and/or claimed herein may comprise a central portion, from which the fan blades may extend, for example in a radial direction. The fan blades may be attached to the central portion in any desired manner. For example, each fan blade may comprise a fixture which may engage a corresponding slot in the hub (or disc). Purely by way of example, such a fixture may be in the form of a dovetail that may slot into and/or engage a corresponding slot in the hub/disc in order to fix the fan blade to the hub/disc. By way of further example, the fan blades maybe formed integrally with a central portion. Such an arrangement may be referred to as a blisk or a bling. Any suitable method may be used to manufacture such a blisk or bling. For example, at least a part of the fan blades may be machined from a block and/or at least part of the fan blades may be attached to the hub/disc by welding, such as linear friction welding.

The gas turbine engines described and/or claimed herein may or may not be provided with a variable area nozzle (VAN). Such a variable area nozzle may allow the exit area of the bypass duct to be varied in use. The general principles of the present disclosure may apply to engines with or without a VAN.

The fan of a gas turbine as described and/or claimed herein may have any desired number of fan blades, for example 16, 18, 20, or 22 fan blades.

As used herein, cruise conditions may mean cruise conditions of an aircraft to which the gas turbine engine is attached. Such cruise conditions may be conventionally defined as the conditions at mid-cruise, for example the conditions experienced by the aircraft and/or engine at the midpoint (in terms of time and/or distance) between top of climb and start of decent.

Purely by way of example, the forward speed at the cruise condition may be any point in the range of from Mach 0.7 to 0.9, for example 0.75 to 0.85, for example 0.76 to 0.84, for example 0.77 to 0.83, for example 0.78 to 0.82, for example 0.79 to 0.81, for example on the order of Mach 0.8, on the order of Mach 0.85 or in the range of from 0.8 to 0.85. Any single speed within these ranges may be the cruise condition. For some aircraft, the cruise conditions may be outside these ranges, for example below Mach 0.7 or above Mach 0.9.

Purely by way of example, the cruise conditions may correspond to standard atmospheric conditions at an altitude that is in the range of from 10000m to 15000m, for example in the range of from 10000m to 12000m, for example in the range of from 10400m to 11600m (around 38000 ft), for example in the range of from 10500m to 11500m, for example in the range of from 10600m to 11400m, for example in the range of from 10700m (around 35000 ft) to 11300m, for example in the range of from 10800m to 11200m, for example in the range of from 10900m to 11100m, for example on the order of 11000m. The cruise conditions may correspond to standard atmospheric conditions at any given altitude in these ranges.

Purely by way of example, the cruise conditions may correspond to: a forward Mach number of 0.8; a pressure of 23000 Pa; and a temperature of -55 deg C.

As used anywhere herein, "cruise" or "cruise conditions" may mean the aerodynamic design point. Such an aerodynamic design point (or ADP) may correspond to the conditions (comprising, for example, one or more of the Mach Number, environmental conditions and thrust requirement) for which the fan is designed to operate. This may mean, for example, the conditions at which the fan (or gas turbine engine) is designed to have optimum efficiency.

In use, a gas turbine engine described and/or claimed herein may operate at the cruise conditions defined elsewhere herein. Such cruise conditions may be determined by the cruise conditions (for example the mid-cruise conditions) of an aircraft to which at least one (for example 2 or 4) gas turbine engine may be mounted in order to provide propulsive thrust.

The skilled person will appreciate that except where mutually exclusive, a feature or parameter described in relation to any one of the above aspects may be applied to any other aspect. Furthermore, except where mutually exclusive, any feature or parameter described herein may be applied to any aspect and/or combined with any other feature or parameter described herein.

Embodiments will now be described by way of example only, with reference to the Figures, in which:
Figure 1 is a sectional side view of a gas turbine engine;
Figure 2 is a close up sectional side view of an upstream portion of a gas turbine engine;
Figure 3 is a partially cut-away view of a gearbox for a gas turbine engine;
Figure 4 shows a borescope port plug received in the concentric borescope ports of a gas turbine engine;
Figure 5 shows a borescope port plug received in non-concentric borescope ports of a gas turbine engine;
Figure 6 shows a guide system provided between two non-concentric ports;
Figure 7 is a detail view of a guide system similar to that shown in Figure 6;
Figure 8 is a detail view of an alternative guide system;
Figure 9A is a schematic view of part of an alternative guide system; and
Figure 9B is a schematic view of part of a further alternative guide system.

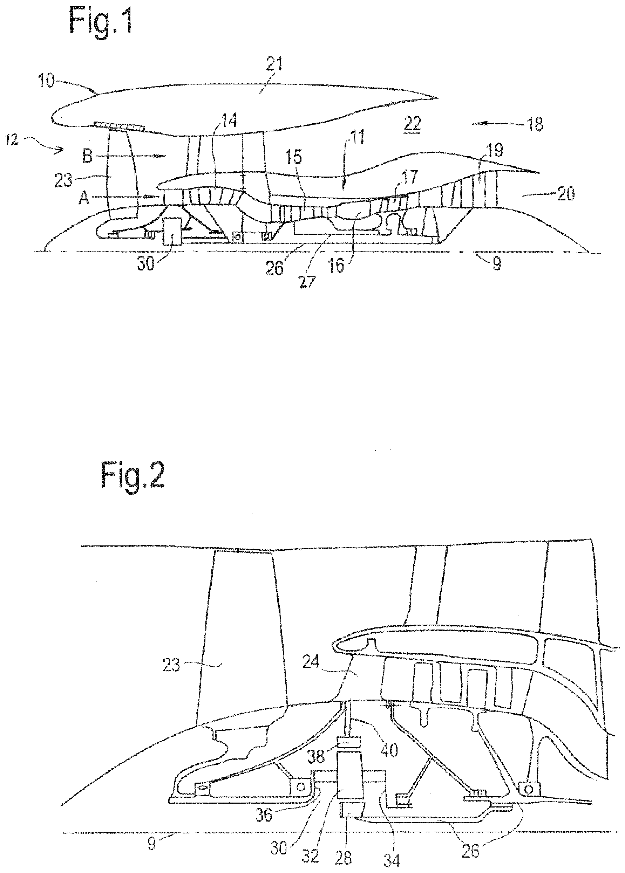

Figure 1 illustrates a gas turbine engine 10 having a principal rotational axis 9. The engine 10 comprises an air intake 12 and a propulsive fan 23 that generates two airflows: a core airflow A and a bypass airflow B. The gas turbine engine 10 comprises a core 11 that receives the core airflow A. The engine core 11 comprises, in axial flow series, a low pressure compressor 14, a high-pressure compressor 15, combustion equipment 16, a high-pressure turbine 17, a low pressure turbine 19 and a core exhaust nozzle 20. A nacelle 21 surrounds the gas turbine engine 10 and defines a bypass duct 22 and a bypass exhaust nozzle 18. The bypass airflow B flows through the bypass duct 22. The fan 23 is attached to and driven by the low pressure turbine 19 via a shaft 26 and an epicyclic gearbox 30.

In use, the core airflow A is accelerated and compressed by the low pressure compressor 14 and directed into the high pressure compressor 15 where further compression takes place. The compressed air exhausted from the high pressure compressor 15 is directed into the combustion equipment 16 where it is mixed with fuel and the mixture is combusted. The resultant hot combustion products then expand through, and thereby drive, the high pressure and low pressure turbines 17, 19 before being exhausted through the nozzle 20 to provide some propulsive thrust. The high pressure turbine 17 drives the high pressure compressor 15 by a suitable interconnecting shaft 27. The fan 23 generally provides the majority of the propulsive thrust. The epicyclic gearbox 30 is a reduction gearbox.

An exemplary arrangement for a geared fan gas turbine engine 10 is shown in Figure 2. The low pressure turbine 19 (see Figure 1) drives the shaft 26, which is coupled to a sun wheel, or sun gear, 28 of the epicyclic gear arrangement 30. Radially outwardly of the sun gear 28 and intermeshing therewith is a plurality of planet gears 32 that are coupled together by a planet carrier 34. The planet carrier 34 constrains the planet gears 32 to precess around the sun gear 28 in synchronicity whilst enabling each planet gear 32 to rotate about its own axis. The planet carrier 34 is coupled via linkages 36 to the fan 23 in order to drive its rotation about the engine axis 9. Radially outwardly of the planet gears 32 and intermeshing therewith is an annulus or ring gear 38 that is coupled, via linkages 40, to a stationary supporting structure 24.

Note that the terms "low pressure turbine" and "low pressure compressor" as used herein may be taken to mean the lowest pressure turbine stages and lowest pressure compressor stages (i.e. not including the fan 23) respectively and/or the turbine and compressor stages that are connected together by the interconnecting shaft 26 with the lowest rotational speed in the engine (i.e. not including the gearbox output shaft that drives the fan 23). In some literature, the "low pressure turbine" and "low pressure compressor" referred to herein may alternatively be known as the "intermediate pressure turbine" and "intermediate pressure compressor". Where such alternative nomenclature is used, the fan 23 may be referred to as a first, or lowest pressure, compression stage.

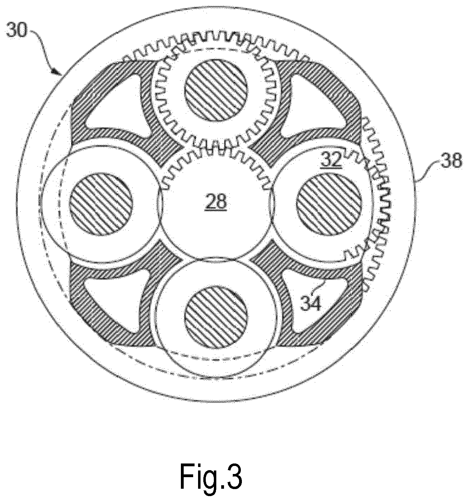

The epicyclic gearbox 30 is shown by way of example in greater detail in Figure 3. Each of the sun gear 28, planet gears 32 and ring gear 38 comprise teeth about their periphery to intermesh with the other gears. However, for clarity only exemplary portions of the teeth are illustrated in Figure 3. There are four planet gears 32 illustrated, although it will be apparent to the skilled reader that more or fewer planet gears 32 may be provided within the scope of the claimed invention. Practical applications of a planetary epicyclic gearbox 30 generally comprise at least three planet gears 32.

The epicyclic gearbox 30 illustrated by way of example in Figures 2 and 3 is of the planetary type, in that the planet carrier 34 is coupled to an output shaft via linkages 36, with the ring gear 38 fixed. However, any other suitable type of epicyclic gearbox 30 may be used. By way of further example, the epicyclic gearbox 30 may be a star arrangement, in which the planet carrier 34 is held fixed, with the ring (or annulus) gear 38 allowed to rotate. In such an arrangement the fan 23 is driven by the ring gear 38. By way of further alternative example, the gearbox 30 may be a differential gearbox in which the ring gear 38 and the planet carrier 34 are both allowed to rotate.

It will be appreciated that the arrangement shown in Figures 2 and 3 is by way of example only, and various alternatives are within the scope of the present disclosure. Purely by way of example, any suitable arrangement may be used for locating the gearbox 30 in the engine 10 and/or for connecting the gearbox 30 to the engine 10. By way of further example, the connections (such as the linkages 36, 40 in the Figure 2 example) between the gearbox 30 and other parts of the engine 10 (such as the input shaft 26, the output shaft and the fixed structure 24) may have any desired degree of stiffness or flexibility. By way of further example, any suitable arrangement of the bearings between rotating and stationary parts of the engine (for example between the input and output shafts from the gearbox and the fixed structures, such as the gearbox casing) may be used, and the disclosure is not limited to the exemplary arrangement of Figure 2. For example, where the gearbox 30 has a star arrangement (described above), the skilled person would readily understand that the arrangement of output and support linkages and bearing locations would typically be different to that shown by way of example in Figure 2.

Accordingly, the present disclosure extends to a gas turbine engine having any arrangement of gearbox styles (for example star or planetary), support structures, input and output shaft arrangement, and bearing locations.

Optionally, the gearbox may drive additional and/or alternative components (e.g. the intermediate pressure compressor and/or a booster compressor).

Other gas turbine engines to which the present disclosure may be applied may have alternative configurations. For example, such engines may have an alternative number of compressors and/or turbines and/or an alternative number of interconnecting shafts. By way of further example, the gas turbine engine shown in Figure 1 has a split flow nozzle 20, 22 meaning that the flow through the bypass duct 22 has its own nozzle that is separate to and radially outside the core engine nozzle 20. However, this is not limiting, and any aspect of the present disclosure may also apply to engines in which the flow through the bypass duct 22 and the flow through the core 11 are mixed, or combined, before (or upstream of) a single nozzle, which may be referred to as a mixed flow nozzle. One or both nozzles (whether mixed or split flow) may have a fixed or variable area. Whilst the described example relates to a turbofan engine, the disclosure may apply, for example, to any type of gas turbine engine, such as an open rotor (in which the fan stage is not surrounded by a nacelle) or turboprop engine, for example. In some arrangements, the gas turbine engine 10 may not comprise a gearbox 30.

The geometry of the gas turbine engine 10, and components thereof, is defined by a conventional axis system, comprising an axial direction (which is aligned with the rotational axis 9), a radial direction (in the bottom-to-top direction in Figure 1), and a circumferential direction (perpendicular to the page in the Figure 1 view). The axial, radial and circumferential directions are mutually perpendicular.

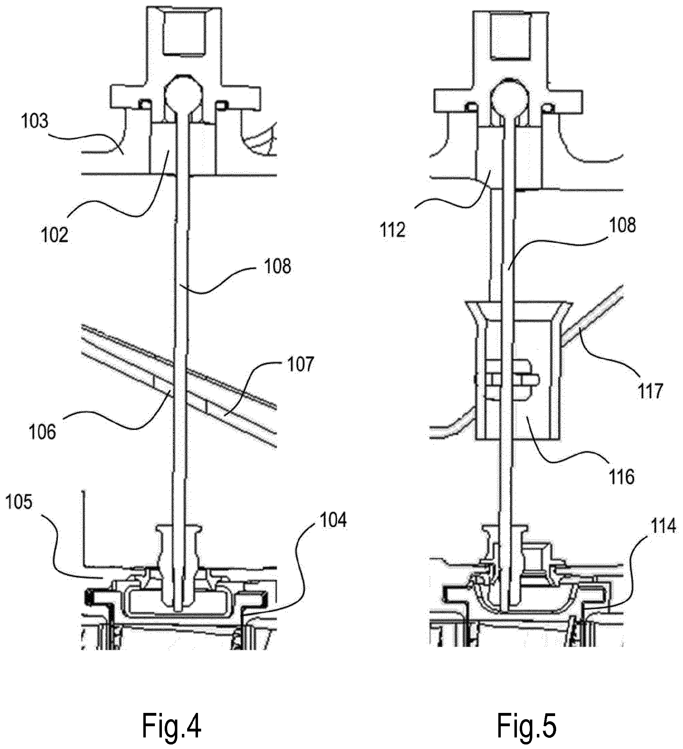

Aeroengine borescope ports commonly comprise a hole in the outer casing of the engine and one or more holes in the inner casing(s) and/or components. In many cases, these holes are aligned or concentric, as shown in Figure 4. The specific arrangement shown comprises an outer hole 102 in the outer casing 103, and a concentric inner hole 104 through an inner component 105 of the engine. The arrangement of Figure 4 additionally comprises an additional hole 106, concentric with the inner and outer holes 102,104, provided in the heatshield 107.

During engine running, these holes 102,104,106 house a borescope port plug 108, which is designed to restrict the air flow from the gas path to the casings. The concentricity of the outer and inner holes 102,104 also enables easy deployment of an inspection or repair system. For example, a rigid inspection borescope or a mechanical boreblender can be inserted to perform on-wing inspection and repair work. Moreover, an embedded optical inspection system (commonly referred to as Engine CCTV) can be inserted between these holes 102,104, such that it plugs the gas path air when stowed and inspects the gas path components when actuated.

There are some borescope ports in aeroengines that do not have concentric outer and inner holes. Figure 5 shows an example of this arrangement. Again, outer and inner holes 112,114 are provided, but their axes are offset. The additional hole 116 through the heatshield 117 in Figure 5 is axially offset from both the outer hole 112 and the inner hole 114.

It can be seen that the borescope plug 108 is designed to accommodate offset to some extent (the body of the plug 108 pivots at the base and thus enables the non-concentric holes to be plugged). However, the non-concentric nature of the holes 112,114,116 effectively restricts the type, size, and features of device that can be deployed to perform inspection or repair activities. For example, a rigid optical borescope or mechanical boreblending tool needs to be inserted off-perpendicular, which will affect the stand-off distance achieved at the distal tip. Flexible videoscopes can navigate successfully between the outer and inner holes 112,114, but achieving a repeatable standoff distance (and thus inspection quality) is challenging. For more sophisticated inspection or repair systems, such as embedded cameras for automated in-situ inspection, non-concentric borescope ports prove problematic, especially when trying to achieve repeatable actuation to look exactly side-on at the neighbouring components.

Hence, an approach is required to physically bridge the gap between the outer and inner borescope port holes such that an inspection or repair system can be repeatedly and accurately inserted.

The high operating temperatures of gas turbines also lead to a desire for thermal management of inspection or repair tools during use. Probes or other tools may need to be cooled in order to survive high engine temperatures.

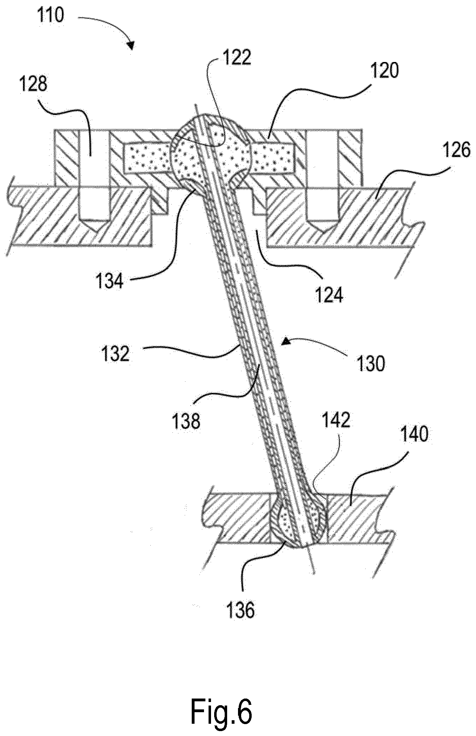

Figure 6 shows an example system, applied to a gas turbine engine. The system or tool 110 is divided in two main components, the first one of which is a housing fixture 120 with a spherical hole 122 in the centre. The housing fixture 120 is located within a first opening 124 in the outer casing 126 of the engine, and is fixed to the outer casing 126. As illustrated, bolt holes 128 are provided in the housing fixture 120. The spherical hole 122 in the housing fixture 120 allows to the second component, the guiding tube 130, to be attached.

The guiding tube 130 comprises a straight tube 132 with a first end 134 in the shape of a sphere and a second end 136 in the shape of an ellipse or a sphere. The first end 134 is attached into the housing fixture, thus constructing a spherical joint, and the second end 136 is received in an opening 142 in the inner casing 140 of the engine. The design of an oval or spherical second end 136 helps to avoid fluid leaks regardless of the angle of the guiding tube 130 relative to the opening 142.

The first and second openings 124,142 may be borescope ports provided in the gas turbine engine. The guiding tube 130 has a hollow interior 138 to create a straight path for an inspection instrument or tool (e.g. an embedded optical inspection system), regardless of the lack of concentricity of the two borescope holes 124,142.

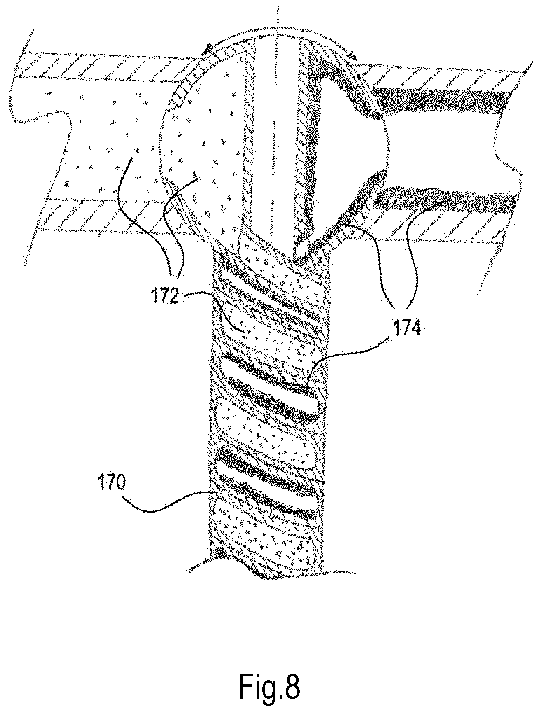

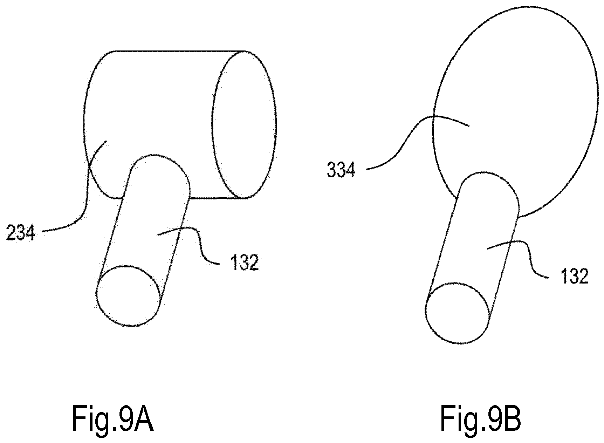

The spherical joint provided by the spherical hole 122 in the housing fixture 120 and the first end 134 of the guiding tube 130 effectively provides an articulated joint in the apparatus. The articulation helps to allow a free-range movement of the guiding tube 130 as illustrated in Figures 8 and 9. This in turn helps to provide a single design of guiding system suitable for several different misaligned borescopes or similar, regardless of the concentricity error.

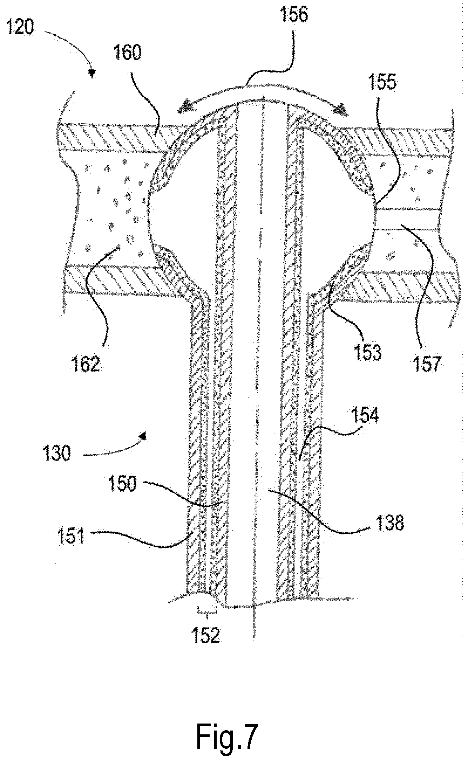

The structure of one example of the guiding tube 130 is shown in Figure 7. The guiding tube 130 is constituted by an inner wall 150 that travels across the entire length of the tube 130, and an outer wall 151 forming the exterior of the guiding tube 130, including the spherical first end 134 and oval second end 136. The first end 134 may be considered an articulation end, and the second end 136 a sealing end. An annular region 152 is provided between the inner and outer walls 150,151 to allow the passage of fluid and vapour to remove heat from the environment, thus protecting equipment received in the hollow interior 138 of the tube 130.

The faces of the inner and outer walls 150,151 that define the annular region 152 are provided with a porous structure 153 through which fluid permeates. In use, heat from a hot region surrounding the straight tube 132 heats and ultimately evaporates the fluid held in this porous structure 153. The resulting vapour then passes through the open part 154 of the annular region 152 removing heat from the system. The tube 130 can thus be considered a thermal management sleeve, specifically a heat pipe, using the process of evaporation and condensation to cool an inspection tool such as a rigid inspection probe. This can help to maintain the tool below a predetermined temperature, for example below its storage temperature, during use.

The porous structure 153 could otherwise be implemented by way of grooves or other similar structure that provides capillary force on a fluid.

The annular region 152 is designed to be completely sealed on the guiding tube 130, except where the interface 155 of the guiding tube 130 and the housing fixture 120 occurs. An arrow 156 is provided to illustrate the movement/articulation provided at the first end of the guiding tube 130 within the housing fixture 120.

The housing fixture 120 also comprises an exterior structural wall 160 and an interior porous region 162 that retains fluid like a sponge. The fluid can move from the porous region 162 of the housing fixture 120 through the porous structure 153 of the guiding tube 130 via capillary action, to permeate/flow around the system 110.

The porous region 162 also provides a cold zone remote from the tube 130 and the opening 124. When the fluid that runs in the porous structure 153 is at the hot zone, the fluid evaporates and enters region 154 and the natural pressure differential formed in the system then moves the vapour to the cold zone where it condenses. One or more open passages or 'vapour gaps' 157 are provided in the porous/grooved region 162 to allow the vapour to pass to the cold zone. The vapour then condenses and seeps into the porous region 162, from where it moves back to the porous structure 153 of the tube by capillary action. The condensation process may happen away from opening 124, and could incorporate a heat sink, or other architecture to improve the efficiency of the condensation process.

The interior region 162 is also largely sealed, except at the interface 155 between the guiding tube and the housing fixture 120. A designed escape (not shown) may also be provided to allow fluid to leave and enter the system 110. The porous region 162 is a large structure such that it can maintain contact with the porous region at the interface 155 regardless of the angle of the tube 130.

The internal fluid region/reservoir 162 can be designed and constructed through additive manufacturing to better allow the fluid to pass. Due to the capacity of additive manufacturing, the tube 130 and the housing fixture 120 can be manufactured together. Examples of possible internal fluid structures include a micro porosity or a micro lattice/groove structure, either or both of which can be produced using a process of additive manufacturing.

To better direct the passage of fluid inside the system 110, the internal structure of the guiding tube 130 can comprise an internal helix 170 to create an open fluid loop with one entry in a specific region of the housing fixture 120 and an exit on another region of the same housing fixture 120. An example of this loop heat pipe approach is shown in Figure 8. The helix design 170 allows for the system to be fully optimized for the direction of flow, depending on the heat of the fluid. For example, a porous/grooved region 172 can be used to retain and direct liquid into the system 110 for cooling. Additionally, or alternatively, a lattice structure 174 can be used to better direct the vapour out of the system 110, removing the heat. The fluid passes into the hot zone and evaporates, and the vapour then passes through a dedicated vapour tube to condense in a cold zone. The porous region 172 and/or lattice structure 174 can be produced using a process of additive manufacturing.

It should be understood that an articulated joint could be provided by providing a first end 134 that is not spherical as described above. For example, Figure 9A shows a section of straight tube 132 of an alternative guiding tube 130 provided with a cylindrical first end 234. The cylindrical first end 234 would cooperate with a similarly shaped in a housing fixture 120. Figure 9B shows a further example of an elliptically shaped first end section 334 to correspond with a larger elliptical hole in the housing fixture 120.

These and other possible alternative shapes can still give flexibility and protection for the thermal management of systems in concentric borescopes, as the thermal expansion on the casing will be taken by the joint, not by the compression of the guiding tube. However, they can also restrict and/or increase the movement of the guiding tube in one or more particular directions as desired. For example, it might be beneficial to allow for more movement on the radial direction of an engine, and at the same time it might be best to restrict this movement on the axial direction.

The system as described allows a thermally managed probe to be deployed into a non-concentric borescope port. Without the articulating joint design provided between the first end of the guide tube and the housing fixture, problems may be encountered where a probe simply cannot be deployed into such ports or the probe would need to be flexible to curve between the two non-concentric holes. Flexible probes are less preferred, because they do not allow a fixed stand-off distance to the component being inspected. This affects the ability of a related algorithm to assess the outputted inspection images.

The articulation of the system helps to accommodate any changes in hole alignment due to thermal expansion and/or contraction during engine running. In situations where inspection is carried out while a gas turbine is running, for example on-wing inspection or measurement performed on an aeroengine, thermal expansion and contraction could damage or break a rigid inspection tool and/or engine components constrained by a rigid, immovable, connection. The arrangement therefore has benefits for concentric, as well as for non-concentric, borescope ports. The ends of the guiding tube, along with the articulation at the first end, help to provide a versatile/universal system that can accommodate various degrees of spacing between the axes of non-concentric holes. Therefore, one system is suitable for use in various situations having concentric holes and/or differently spaced non-concentric holes.

The system also helps, in general, to thermally manage a probe or inspection tool in a hot environment. It can thus be applied to any number of industrial fields, in addition to aeroengines as discussed above. These include, but are not limited to, marine and industrial gas turbines, and nuclear or steel production environments, where remote visual inspection via an embedded probe is required.

It will be understood that the invention is not limited to the embodiments above-described and various modifications and improvements can be made without departing from the concepts described herein. Except where mutually exclusive, any of the features may be employed separately or in combination with any other features and the disclosure extends to and includes all combinations and subcombinations of one or more features described herein.

## Claims

1. Inspection and maintenance apparatus (110) for connecting apertures in an article to be inspected, the article comprising an outer shell (126) having a first aperture (124) therein, and an internal part (140), located within the outer shell, and having a second aperture (142) therein, the apparatus comprising
a tubular guide (130) having a straight elongate body with first (134) and second (136) ends and a hollow interior for receiving an inspection tool, and
a housing fixture (120) for mounting the tool to the outer shell,
wherein the first end of the tubular guide is received and retained within the housing fixture to provide an articulated joint between the tubular guide and the housing fixture, and the second end of the tubular guide is insertable, in use, through the first aperture, and is engageable with the second aperture provided in the internal part.

2. Inspection and maintenance apparatus according to claim 1, wherein a fluid flow passage is provided around the hollow interior (138) of the tubular guide for cooling the apparatus.

3. Inspection and maintenance apparatus according to claim 2, wherein the tubular guide comprises an inner wall (150) defining the hollow interior, and an outer wall (151) spaced from the inner wall to provide an annular space (152), wherein the fluid flow passageway is provided between the inner and outer walls.

4. Inspection and maintenance apparatus according to claim 2, wherein the tubular guide comprises a helical fluid flow passageway (170) around the hollow interior.

5. Inspection and maintenance apparatus according to claim 3 or 4, wherein the fluid flow passageway comprises a micro porosity structure (153, 172, 174).

6. Inspection and maintenance apparatus according to claim 5, further comprising a vapour passageway (157).

7. Inspection and maintenance apparatus according to claim 6, wherein the vapour passageway is provided within the fluid flow passageway.

8. Inspection and maintenance apparatus according to any preceding claim, wherein the housing fixture comprises a micro porosity (162) and/or a micro lattice internal structure.

9. Inspection and maintenance apparatus according to any preceding claim, wherein the housing fixture comprises a chamber for containing fluid, and wherein the first end of the tubular guide comprises an opening to the fluid flow passage, the opening being received within the chamber.

10. Inspection and maintenance apparatus according to any preceding claim, wherein the first end of the tubular guide is substantially spherical, and the housing fixture comprises a substantially spherical hole for receiving the first end of the tubular guide.

11. Inspection and maintenance apparatus according to any of claims 1 to 9, wherein the first end of the tubular guide has a substantially tubular shape, and the housing fixture comprises a substantially tubular hole for receiving the first end of the tubular guide.

12. Inspection and maintenance apparatus according to any of claims 1 to 9, wherein the first end of the tubular guide has a substantially elliptical shape, and the housing fixture comprises a substantially elliptical hole for receiving the first end of the tubular guide.

13. Inspection and maintenance apparatus according to any preceding claim, wherein the second end of the tubular guide is substantially elliptical.

14. A gas turbine engine (10) for an aircraft comprising:
an engine core (11) comprising a turbine (19), a compressor (14), and a core shaft (26) connecting the turbine to the compressor;
a fan (23) located upstream of the engine core, the fan comprising a plurality of fan blades; and
a gearbox (30) that receives an input from the core shaft (26) and outputs drive to the fan so as to drive the fan at a lower rotational speed than the core shaft,
a housing fixture mounted to an outer shell of the engine (10), and
a tubular guide having a straight elongate body with first and second ends and a hollow interior for receiving an inspection tool,
wherein the first end of the tubular guide is received and retained within the housing fixture to provide an articulated joint between the tubular guide and the housing fixture, and the second end of the tubular guide is insertable, in use, through the first aperture, and is engageable with a second aperture provided in an internal part of the engine.

15. The gas turbine engine according to claim 14, wherein:
the turbine is a first turbine (19), the compressor is a first compressor (14), and the core shaft is a first core shaft (26);
the engine core further comprises a second turbine (17), a second compressor (15), and a second core shaft (27) connecting the second turbine to the second compressor; and
the second turbine, second compressor, and second core shaft are arranged to rotate at a higher rotational speed than the first core shaft.
